# EUROPÄISCHE PATENTSCHRIFT

(11) **EP 0 532 537 B1**
(45) Veröffentlichungstag und Bekanntmachung des Hinweises auf die Patenterteilung: **02.03.1994**
(21) Anmeldenummer: 91909683.4
(22) Anmeldetag: 29.05.1991
(51) Int. Cl.: B27C 1/12

(54) **VERFAHREN ZUM SPANABHEBENDEN BEARBEITEN VON ROHLINGEN AUS HOLZ ODER ÄHNLICHEN WERKSTOFFEN WIE BEISPIELSWEISE KUNSTSTOFF**
PROCESS FOR THE MACHINING OF BLANKS MADE OF WOOD OR SIMILAR MATERIALS, SUCH AS PLASTIC
PROCEDE POUR L'USINAGE PAR ENLEVEMENT DE COPEAUX DE PIECES BRUTES EN BOIS OU EN MATERIAUX SIMILAIRES, P.EX. EN PLASTIQUE

(30) Priorität: 05.06.1990 DE 4017991
(43) Veröffentlichungstag der Anmeldung: 24.03.1993
(73) Patentinhaber: HOFFMANN & KÜHNHENRICH GMBH, D-56070 Koblenz (DE)
(72) Erfinder: KÜHNHENRICH, Ludger, D-5400 Koblenz (DE)
(74) Vertreter: Hentschel, Peter, Dipl.-Ing.
(86) Internationale Anmeldenummer: DE9100466
(87) Internationale Veröffentlichungsnummer: WO9118722

(56) Entgegenhaltungen:
- DE-A- 1 453 200
- DE-C-00 886 213
- US-A- 2 998 038
- US-A- 3 742 992

## Beschreibung

Die Erfindung betrifft ein Verfahren zum spanabhebenden Bearbeiten von Rohlingen aus Holz oder ähnlichen Werkstoffen wie beispielsweise Kunststoff o. dgl. mittels Abrichtmaschinen o.dgl., bei dem längliche Holzrohlinge auf einer Auflage und Führungsfläche längst zu sich selbst mittels einer Vorschubeinrichtung solange mit dem Vorderende an einem rotierenden Werkzeug, wie z.B. einem Abrichthobelkopf, entlang bewegt werden, bis das bearbeitete Vorderende von einer hinter dem Werkzeug angeordneten Vorschubwalze erfaßt und über einen Referenztisch weiter bewegt wird.

Zum Bearbeiten von Hölzern im Sinne des vorgenannten Verfahrens werden Abrichtmaschinen, Vierseitenabricht- und Dickenhobelautomaten, Profilfräsautomaten, Abricht-Füge- und Kehlmaschinen u.a. verwendet.

Die rotierenden Schneidwerkzeuge arbeiten am Holzrohling gegen dessen Vorschubrichtung, so daß beim Vorschub die Schneidreaktionen als Widerstand überwunden werden müssen. Hat ein Holzrohling mit seinem Vorderende das Schneidwerkzeug passiert und Kontakt mit der ersten Vorschubwalze, dann ist diese in der Lage, den weiteren Vorschub mit ihrer Förderkraft allein zu bewirken, und zwar mit der für die Bearbeitung erforderlichen oder optimalen Vorschubgeschwindigkeit.

Bei den bekannten Verfahren gibt es gewisse Probleme, die Holzrohlinge soweit in die jeweilige, bearbeitende Maschine hinein und mit dem Vorderende am rotierenden Werkzeug vorbei bis zum Kontakt mit der ersten Vorschubwalze zu fördern.

Weit verbreitet ist die Handeingabe. Bei dieser Vorgehensweise gehört eine gewisse ubung und Erfahrung sowie Ausdauer und Konzentration des Maschinenarbeiters dazu, den Holzrohling mit der nötigen Kraft, aber gleichzeitig auch mit der erforderlichen und auch gleichbleibenden Vorschubgeschwindigkeit einzugeben bis das Vorderende des Holzrohlings Kontakt mit der ersten Vorschubwalze hat. Selbst erfahrene Maschinenarbeiter machen dabei irgendwann Fehler, mit dem Ergebnis, daß das Vorderende des Holzrohlings beim Bearbeiten bzw. Passieren des rotierenden Werkzeugs wegen nicht angepaßter Vorschubgeschwindigkeit und nicht gleichbleibendem Andruck Rattermarken bekommt.

Handeingabe ist Handarbeit und daher teuer. Sie ist beim heutigen Entwicklungsstand der Technik allenfalls in Handwerksbetrieben vertretbar. Zumindest die mit Rattermarken verunzierten Vorderenden der bearbeiteten Hölzer müssen abgeschnitten werden, weil sie für weitere Verwendung unbrauchbar sind. Es entsteht also mehr oder weniger reichlich Abfall. Sind die Holzrohlinge dagegen schon genau auf Länge geschnitten, dann sind fertige Hölzer mit Rattermarken als Ganzes Ausschuß.

Bearbeitungsmaschinen für Holzrohlinge haben in der Regel auch sogenannte Einzugswalzen, die die erforderliche Vorschubgeschwindigkeit und gleichbleibenden Andruck garantieren. Sie sind unmittelbar vor dem rotierenden Werkzeug gegenüber der Auflage- und Führungsfläche angeordnet.

In der Praxis wird die Benutzung der Einzugswalze, wenn irgendmöglich, vermieden. Häufig werden die Walzen von ihren Wellen gezogen, also ausgebaut. Zumindest werden sie aber in größtmöglichem Abstand von der Auflage- und Führungsfläche gebracht und festgestellt, damit sie unter gar keinen Umständen mit dem Holzrohling in Berührung kommen können. Solche Arbeiten können nur bei stillgesetzter Bearbeitungsmaschine durchgeführt werden.

Der Grund für dieses Vorgehen besteht darin, daß Hölzer, die mit arbeitender Einzugswalze bearbeitet wurden, recht ungenau ausfallen, insbesondere z.B. nicht die Geradlinigkeit haben, die für die schon genannten Präzisionsprofile für Fenster, Möbel usw. gefordert wird.

Als Ursache dieser schlechten Geradheit erweist sich der relativ hohe Anpreßdruck der Einzugswalze. Er ist aber unerläßlich, weil der Anschnitt, bzw. der erste Kontakt zwischen den Schneiden des rotierenden Werkzeugs und der Stirnfläche des Vorderendes des Holzrohlinges mitunter stoß- oder schlagartige Schneidreaktionen verursacht, die den Rohling ohne festen Halt durch entsprechenden Andruck der Einzugswalze zurückstoßen oder schleudern würden.

Dieser, für den Anschnitt unverzichtbare, relativ hohe Andruck der Einzugswalze, erweist sich aber für die Bearbeitung auf der Länge als Nachteil. Jede nährungsweise linienförmige Druckbeanspruchung eines, auf einer festen Unterlage aufliegenden Holzes verursacht einen Biegeeffekt, unter dessen Einfluß die beiderseits der linienförmigen Druckbeanspruchung -Einzugswalze- liegenden Abschnitte des Holzes die Tendenz haben, von der festen Unterlage abzuheben. Dieser Verformungseffekt ist druckabhängig und hängt außerdem von der jeweiligen Konsistenz des Holzes unter der linienförmigen Druckwirkung ab.

Weil Holz ein natürlich gewachsener Werkstoff ist, ist der Wert der Ungenauigkeit bezogen auf die Geradheit der unteren Fläche sehr unterschiedlich. Wird nun mit einer Einzugswalze vor der Abrichtwelle gearbeitet, wird das Holz auf dem Eingabetisch durchgedrückt, und sobald es die gesamte Vorschubeinrichtung verläßt, federt es wieder in die natürliche Form zurück und ist also nicht gerade gehobelt.

Man hat schon versucht, diesen Effekt durch sogenanntes "Fein-, Ein- oder Anstellen" der Einzugswalze zu begrenzen. Fein-Anstellen bedeutet niedrigen Anpreßdruck wählen. Dieser Maßnahme sind aber Grenzen gesetzt, denn Holzrohlinge haben vor der Bearbeitung naturgemäß relativ große Maßabweichungen. Somit muß auch bei der Feinanstellung noch gewährleistet sein, daß auch der dünnste Holzrohling bei schlagender Schnittreaktion beim Anschnitt sicher gehalten und gefördert wird.

Bei extrem dicken Holzrohlingen kann dann aber auch der fein eingestellte Anpreßdruck unerwünschte Werte annehmen. Bei dicken Zonen auf der Länge des Holzrohlinges und bei unabhängig von der Dicke unterschiedlicher Konsistenz ergeben sich folglich dennoch Biegeeffekte wechselnden Ausmaßes und somit entsprechende Rückstellungen des durchgedrückten Holzes, was wiederum auf die Geradheit des Holzes entscheidenen Einfluß hat.

Die US,A, 2 998 038 befaßt sich mit dem Nachteil von Einzugswalzen bei Holzbearbeitungsmaschinen. Es wird darauf hingewiesen, daß Rohlinge, die auch längs zu sich selbst verwunden sind, unter der Einzugswalze quer beansprucht werden, so daß zusätzliche Bearbeitungsfehler auftreten. Als Fazit sollen Einzugswalzen weggelassen und die Holzrohlinge von Hand eingeschoben werden, bis die erste Vorschubwalze hinter dem ersten rotierenden Werkzeug die Förderung übernimmt.

Bei sehr kurzen Holzrohlingen kann aber auch die Handeingabe problematisch werden, so daß man gezwungen ist, mit der Einzugswalze zu arbeiten und Ungenauigkeiten zu tolerieren.

Es gibt noch das sogenannte "Kalibrieren" von Holzrohlingen, bei dem es auf besondere Geradheit der bearbeiteten Hölzer nicht ankommt, so daß in solchen Fällen immer mit Einzugswalze gearbeitet wird, und zwar deswegen, weil diese Arbeitsweise einfacher und bequemer ist, als die anderen geschilderten Vorgehensweisen.

Für eine mechanische Eingabe, welche Handarbeit ersetzt, können eingabeseitig außerhalb der jeweiligen Bearbeitungsmaschine angeordnete Förderer verwendet werden, vorausgesetzt, die Förderer lassen sich auf die jeweilige erforderliche Förder- bzw.
Vorschubgeschwindigkeit einfach und bequem einstellen und vorausgesetzt, die Holzrohlinge sind lang genug, damit diese Förderer noch auf die Holzrohlinge wirken können, bis deren Vorderende die Vorschubwalze erreicht.

Bei sehr vielen Holzrohlingen, aus denen z.B. Präzisionsprofile für Fenster, Möbel o.dgl. gefertigt werden soll, ist die Voraussetzung ausreichender Länge aber nicht erfüllt. Somit verbleibt zumindest für solche Arbeiten nur die teuere, abfall- und ausschußträchtige Handeingabe.

Die DE-A, 145 32 00 offenbart ein Verfahren der eingangs genannten Art, bei dem die Holzrohlinge unter Vermeidung der Handeingabe und ohne Einzugswalzen nur solange maschinell vorgeschoben werden, bis die hinter dem rotierenden Werkzeug arbeitende Transport- oder Vorschubwalze die Förderarbeit übernimmt.

Dabei wird eine Maschine verwendet, die ein schachtartiges Vorratsmagazin für übereinander gestapelte Holzrohlinge aufweist. Damit wird das Einfügen in eine Bearbeitungsstrecke sehr erschwert, weil das Befüllen des Magazins nur von Hand geschehen kann.

Zur Entnahme einzelner Holzrohlinge ist eine Schachtverriegelungseinrichtung und eine Entnahmeeinrichtung erforderlich, zu deren Betätigung Druckzylinder verwendet werden.

Die Entnahmeeinrichtung schiebt den Holzrohling quer zu sich selbst zwischen zwei höhenpendelnd gehaltene, übereinander angeordnete Führungsstücke, die gesteuert federbeaufschlagbar sind, um den eingeschobenen Rohling zwischen sich einzuklemmen. Dabei ändert sich je nach Rohling die Höhe der Unterseite des Rohlings relativ zum rotierenden Werkzeug, d.h. eine feste Auflage oder Führungsfläche fehlt.

Ist der Rohling zwischen den Führungsstücken eingeklemmt, dann werden druckzylinderbetätigte Greifer beidseitig gegen den Rohling vorgeschoben bis ein Festsitz erreicht it. Alsdann wird ein Transportschieber -wiederum ein Druckzylinder- betätigt, der die Greifer und mit ihnen den Rohling in Richtung Bearbeitungswerkzeug schiebt, bis das bearbeitete Vorderende von der Vorschubwalze erfaßt wird.

Endschalter steuern die Greifer und den Transportschieber um, so daß der Rohling nicht gegen die Wirkung derselben gefördert werden muß. Allerdings muß der Rohling während der weiteren Bearbeitung von der Auszieh-, Transport- oder Vorschubwalze gegen den Klemmwiderstand, den die Führungsstücke ausüben, bewegt werden.

Erst, wenn das Werkstück die Führungsstücke verlassen hat, können letztere wieder in Aufnahmestellung zurückgestellt und alle übrigen Einrichtungen in Ausgangsposition gebracht werden, um ein weiteres Werkstück zu bearbeiten.

Die vielen Einrichtungen sind kompliziert, störanfällig, wartungsbedürftig, Verschleiß unterworfen und teuer.

Die ganzen Eingabeeinrichtungen sind größenbezogen. Vom Vorratsmagazin bis zu den Führungsstücken sind für jede Rohlingsgröße, insbesondere -Länge, andere, passende Teile, evtl. sogar zusätzliche Arbeitszylinder, einzubauen, und die für eine zuvor bearbeitete Rohlingsgröße passenden Teile sind zum Teil auszubauen. Hieraus ergeben sich Umrüstzeiten bei Größenwechseln der Rohlinge.

Die Vorschubgeschwindigkeit der Rohlinge ist nicht veränderbar. Eine Einflußnahme auf den Transportschieber ist nicht offenbart, so daß die z.B. je nach Holz-oder Werkstoffart des Rohlings optimale Vorschubgeschwindigkeit nicht eingestellt werden kann.

Die Taktfolge, d.h. die Zeit, die zwischen der Bearbeitung zweier Rohlinge vergeht, ist wegen der zahlreichen Rückstellvorgänge und wegen des zeitlichen Nacheinanders der Eingabeeinrichtungen sehr groß. Falls mit diesem Verfahren überhaupt kurze Rohlinge bearbeitet werden können, dann kann es vorkommen, daß die eigentliche Bearbeitungszeit durch das rotierende Werkzeug nur einen Bruchteil der Zeit beansprucht, die vergeht, bevor der nächste Rohling das Werkzeug erreicht. Lange Totzeiten bei laufender Maschine sind kostspielig und verhindern ein rasches wirtschaftliches Arbeiten.

Der Verzicht auf die Einzugswalze und auf die Handeingabe verlangsamt die Arbeits- und Taktzeit, macht lange Umrüstzeiten erforderlich und führt zu einer teuren, störanfälligen Maschine. Ein Vorteil gegenuber Handeingabe wird nicht erreicht, sondern das Gegenteil. Einzugswalzen sind zwar nachteilig, arbeiten aber gegenüber diesem bekannten Vorgehen schneller und benötigen keine Umrüstzeiten usw. .

Ausgehend von diesem bekannten Stand der Technik, liegt der Erfindung die Aufgabe zugrunde, ein Verfahren der eingangs genannten Art zu schaffen, bei dem das Arbeiten durch den Einsatz der an sich bekannten Einzugswalze vereinfacht und erleichtert werden kann, ohne zugleich die aus dem an sich bekannten Gebrauch der Einzugswalze resultierenden Nachteile in Kauf nehmen zu müssen.

Zur Lösung dieser Aufgabe kennzeichnet sich das eingangs genannte Verfahren erfindungsgemäß dadurch, daß die Holzrohlinge über eine unbewegliche Führungsfläche einer unmittelbar vor dem Werkzeug angeordneten, gegen die Führungsfläche drückenden, an sich bekannten Einzugswalze vorgeschoben, und die Einzugswalze bei einsetzendem Zug der Vorschubwalze gesteuert andrucklos gesetzt wird, und daß die Einzugswalze wieder in Förderposition für einen Holzrohling gebracht wird, sobald der in Bearbeitung befindliche Holzrohling den Wirkbereich der Vorschubwalze verlassen und bevor der nächstfolgende Holzrohling den Wirkbereich der Einzugswalze erreicht hat.

In vorteilhafter Weiterbildung des erfindungsgemäßen Verfahrens ist vorgesehen, daß das Vorderende des Holzrohlings, bei einem ersten Förderkontakt mit der ersten Vorschubwalze sensorisch erfaßt wird, daß die Holzrohlinge mittels pneumatisch beaufschlagter Einzugswalzen angedrückt werden, daß der Andruck der Holzrohlinge pneumatisch aufgehoben wird, sobald jeweils der Förderkontakt ihres Vorderendes mit der ersten Vorschubwalze sensorisch erfaßt ist, und daß das Ende des Förderkontaktes zwischen der ersten Vorschubwalze und dem Hinterende eines jeweiligen Holzrohlings erfaßt und zur Steuerung der pneumatischen Druckbeaufschlagung der Einzugswalzen benutzt wird.

Bei dem Verfahren nach der Erfindung werden die an sich bekannten Einzugswalzen benutzt, um die Holzrohlinge an ihren Vorderenden zu erfassen, die Vorderenden durch die Bearbeitung mit dem rotierenden Werkzeug und bis zur Förderberührung mit der ersten Vorschubwalze zu schieben. Exakt im sensorisch oder auf andere bekannte Weise erfaßten Augenblick der Förderberührung des Vorderendes des Holzrohlinges mit der ersten Vorschubwalze werden entweder die Einzugswalzen gesteuert abgehoben oder -wie bei der vorteilhaften Weiterbildung des erfindungsgemäßen Verfahrens in Anspruch 2 beschriebender Andruck der Einzugswalzen pneumatisch aufgehoben. Die Holzrohlinge werden von diesem Augenblick an wie bei der Handeingabe allein von der ersten Vorschubwalze gefördert.

Da der Andruck der Einzugswalzen somit jeweils nur kurzfristig, gewissermaßen taktweise und bei der vorteilhaften Weiterbildung des erfindungsgemäßen Verfahrens auch nur auf den vorderen Bereich der Holzrohlinge wirkt, können auf der Lange derselben auch keine Biegeeffekt infolge hohen Einzugswalzenandrucks entstehen, und es kommt somit auch nicht zu Abweichungen auf die Geradheit. Es können Präzisionsprofile für Fenster, Möbel usw. gefertigt werden, als ob mit Handeingabe gearbeitet würde.

Gleichzeitig werden erfindungsgemäß aber auch die Nachteile der Handeingabe, nämlich der Einsatz teuerer menschlicher Arbeitskraft und das Auftreten von Ausschuß oder Abfall infolge von Rattermarken vermieden.

Kurze Präzsionsprofile, bei denen auch die Handeingabe problematisch wird, können mit dem Verfahren nach der Erfindung überhaupt erstmalig vorteilhaft absolut gerade gefertigt werden; denn bisher mußte in solchen Fällen mit dauernd wirkenden Einzugswalzen, daher auch mit auftretendem Biegeeffekt gearbeitet und mit entsprechenden Verformungen gerechnet werden.

Um die Einzugswalzen gemäß der Weiterbildung nach Anspruch 2 wieder funktionsfähig mit Druck zu beaufschlagen wird erfindungsgemäß die Passage des Hinterendes des Holzrohlings an einem geeigneten Bezugspunkt sonsorisch erfaßt.

Zweckmäßig ist es, den gleichen Sensor, der den Förderkontakt der ersten Vorschubwalze mit dem Vorderende des Holzrohlings erfaßt, auch dazu zu benutzen, die Unterbrechung dieses Förderkontaktes zu erfassen, wenn das Hinterende des fertig bearbeiteten Holzes die erste Vorschubwalze passiert. Eine umgekehrte geeignete Schaltmaßnahme löst dann die erneute pneumatische Druckbeaufschlagung der Einzugswalzen aus, so daß der nächste Holzrohling am Vorderende erfaßt und bis zum Erreichen der ersten Vorschubwalze eingezogen werden kann.

Es kann im Rahmen der Erfindung aber auch sinnvoll sein, einen zweiten Sensor an einem anderen Bezugspunkt zu verwenden, um die Einzugswalze wieder mit Druck zu beaufschlagen.

Bei dichter Folge besonders kurzer Holzrohlinge, kann dieser Bezugspunkt, bzw. Sensor z.B. an oder nahe hinter den Einzugswalzen liegen, so daß diese bereits wieder funktionsfähig geschaltet oder pneumatisch druckbeaufschlagt werden, wenn das Hinterende des Holzrohlings unter den drucklosen Einzugswalzen vorbeigewandert ist.

Pneumatische, taktweise Druckbeaufschlagung der Einzugswalzen bietet sich an, weil die Bearbeitungsmaschinen häufig bereits eine pneumatische Ausrüstung haben. Es ist aber auch möglich, andere mechanische Mittel zur taktweisen Druckbeaufschlagung oder zur taktweisen Unterbrechnung der Druckbeaufschlagung der Einzugswalzen einzusetzen.

Als Sensoren können bekannte Berührungs- oder Endschalter, die in der Bahn der Holzrohlinge angeordnet werden oder die den Hub der ersten Vorschubwalze erfassen, benutzt werden. Es kann aber auch berührungsfrei, z.B. mit Lichtschranken usw. gearbeitet werden.

Die Erfindung überwindet oder umgeht das bisherige Hindernis beim Benutzen von Einzugswalzen, das darin bestand, daß entweder nur Dauerbetrieb oder nur Betriebslosigkeit nach vorherigem Ausbau oder weitem Ausrücken bei stillgesetzter Bearbeitungsmaschine kannte, indem periodisch oder taktweise gesteuerte Druckbeaufschlagung und Druckaufhebung angewendet werden, so daß immer mit Eingabe durch die Einzugswalzen aber ohne die Nachteile bei deren Dauerbetrieb und ohne Montage oder Umbaumaßnahmen an der stillgesetzten Maschine gearbeitet werden kann.

Ein einfacher Schalter kann die Steuerelemente oder Sensoren außer Betrieb setzen, wenn "kalibriert" werden soll und daher die Einzugswalzen im Dauerbetrieb arbeiten müssen.

Der Ablauf des Verfahrens nach der Erfindung ist in den Zeichnungen schematisch dargestellt.

Es zeigt:
- Fig. 1 -: eine zur Ausübung des Verfahrens geeignete, an sich beliebige Abrichtmaschine o.dgl. im Zustand zwischen zwei Bearbeitungsvorgängen,
- Fig. 2 -: die Abrichtmaschine gemäß Fig. 1 am Beginn eines Bearbeitungsvorganges unmittelbar vor dem Zeitpunkt, bei dem die Einzugswalze drucklos gemacht wird und
- Fig. 3 -: die Abrichtmaschine gemäß Fig. 1 und 2 im Zustand der Bearbeitung bei druckloser -hier: ausgerückter- Einzugswalze.

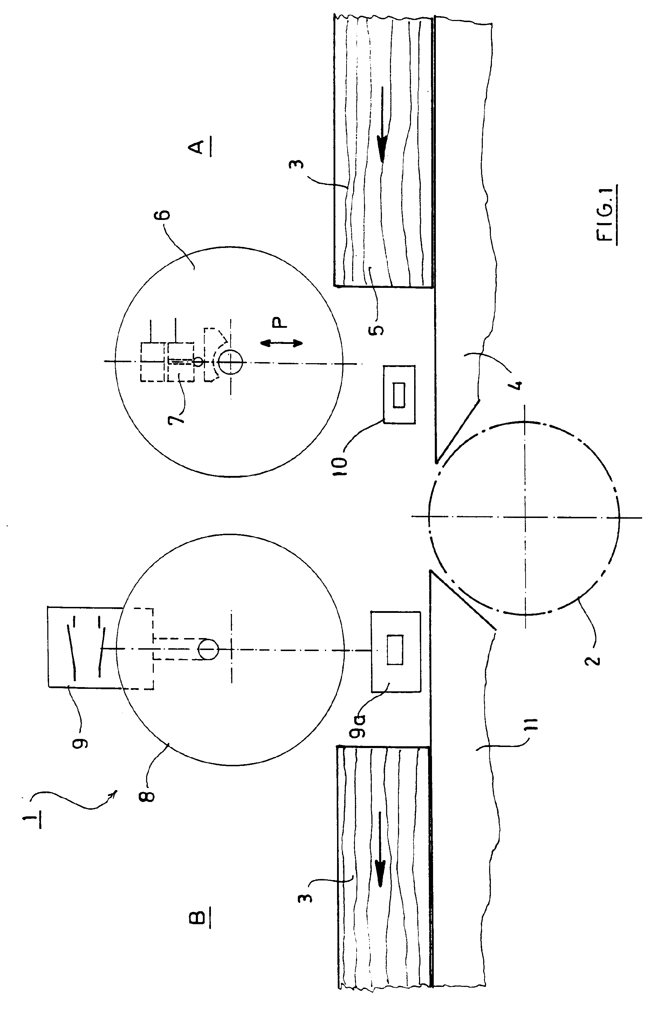

Die Figuren 1 bis 3 zeigen schematisch in Teilen eine Abrichtmaschine 1, die repräsentativ für beliebige andere spanabhebend arbeitende Holzbearbeitungsmaschinen dargestellt wird. Es könnte sich also auch um eine Vierseiten-Abrichtmaschine, eine Dickenhobelmaschine, einen Profilfräsautomaten sowie um Abricht-Füge- und Kehlmaschinen o.dgl. handeln.

Die Abrichtmaschine 1 ist mit wenigstens einem angetriebenen, spanabhebend arbeitenden Werkzeug, hier mit einem Abrichthobelkopf 2 versehen.

Holzrohlinge 3 werden an der Eingabeseite A auf einem Abrichttisch 4 liegend, mit ihrem Vorderende 5 voran, längs zu sich selbst unter eine Einzugswalze 6 geschoben. Ein pneumatisches Arbeitsglied 7 beaufschlagt die Einzugswalze 6, gesteuert mit gegen den Holzrohling 3 wirkendem Druck -Pfeil P-. Ein nicht gezeigter Antrieb dreht die Einzugswalze 6, die vor dem Abrichthobelkopf 2 liegt.

Hinter dem Abrichthobelkopf 2 befindet sich eine druckbeaufschlagte und rotierend angetriebene Vorschubwalze 8, deren Förderwirkung auf den Holzrohling 2 so groß ist, daß dieser durch die Bearbeitung vom Abrichthobelkopf 2 gezogen wird.

Figur 1 zeigt den Zustand zwischen zwei Bearbeitungen von Holzrohlingen 3, die Einzugswalze 6 und die Vorschubwalze 8 stehen tief.

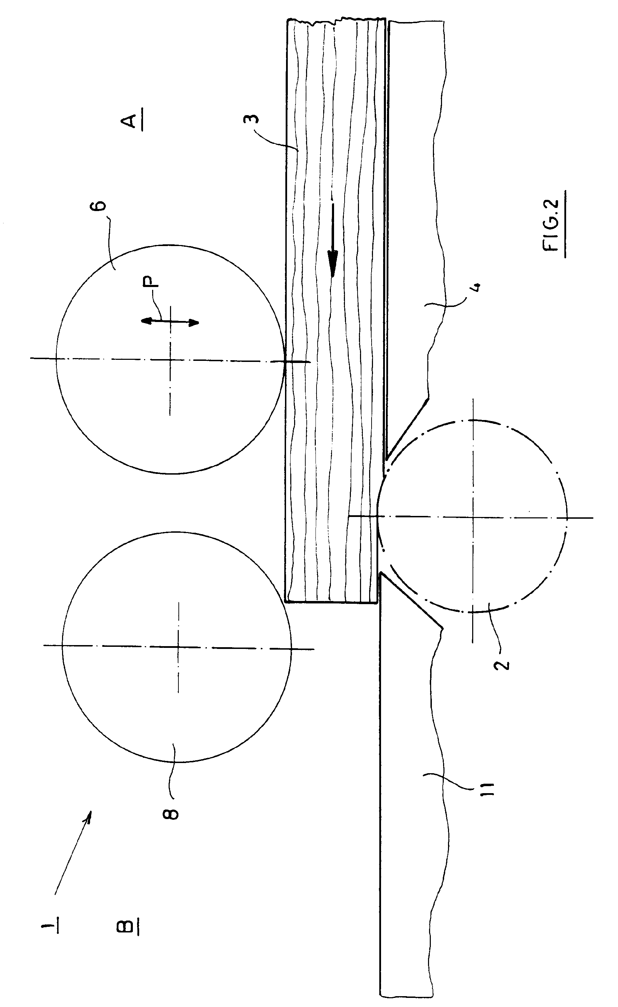

Figur 2 zeigt, daß das Vorderende 5 des Holzrohlings 3 bereits den Abrichthobelkopf 2 passiert hat und auf einem Referenztisch 11 gleitend aufliegt, zwar eine Berührung, aber noch keinen Förderkontakt mit der Vorschubwalze 8 hat, während die Einzugswalze 6 "noch" druckbeaufschlagt ist und fördert.

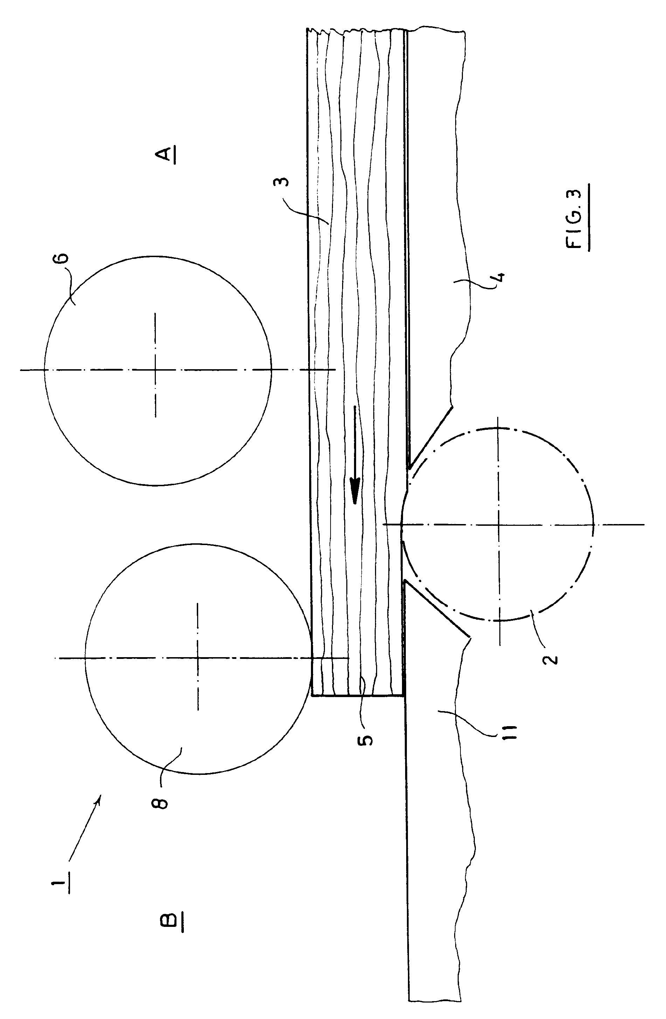

Figur 3 gibt den Zustand kurz danach wieder. Das Vorderende 5 des Holzrohlings 3 hat die Vorschubwalze 8 gegen deren Andruck nach oben gedrückt und wird daher von dieser gefördert.

Den Aufwärtshub der ersten Vorschubwalze 8 hat ein Schalter 9 -Aufwärtsbewegung der Welle- sensorisch erfaßt.

Der sensorische Schaltimpuls wird benutzt, um die Einzugswalze 6 drucklos zu machen. Die Einzugswalze 6 kann -siehe Fig. 3- auch vom Holzrohling 3 abgehoben werden.

Der Holzrohling 3 wird fertig bearbeitet und verläßt schließlich auch die Vorschubwalze 8 -Zustand gemäß Fig. 1- Der Schalter 9 ist wieder in der Ausgangsstellung und hat mit seinem Schaltimpuls die Einzugswalze 6 entweder mit Druck nach unten beaufschlagt, ggfs. zusätzlich aus der abgehobenen Position gemäß Fig. 3 wieder nach unten bewegt, indem das pneumatische Arbeitsglied 7 entsprechend ausgesteuert wurde.

Anstelle eines Schalters 9 an der Vorschubwalze 8 können auch Sensoren 9a in der Bahn der Holzrohlinge 3 z.B. als Endschalter oder als berührungslos arbeitende Schalter, benutzt werden.

Zum Rückführen der Einzugswalze 6 in Arbeitsposition oder zumindest zur pneumatischen erneuten Druckbeaufschlagung derselben können auch ein zeitlich früher arbeitender Schalter 10 in der Bahn der Holzrohlinge 3 benutzt werden, der hinter der Einzugswalze 6 liegt und beim Passieren des Hinterendes des Holzrohlings 3 schaltet.

Somit werden Holzrohlinge 3 nur im Bereich ihrer Vorderenden 5 und nur solange, bis die Vorderenden von der Vorschubwalze 8 erfaßt und gefördert werden von der Druckwirkung der Einzugswalze 6 belastet und von dieser gefördert.

Die auf Druckwirkung der Einzugswalze 6 infolge Biegeeffekts normalerweise auftretenden Verformungen an den bearbeiteten Holzrohlingen 3 werden daher vermieden, weil die Länge der Holzrohlinge 3 ohne Einzugswalze 6 bearbeitet wird.

Es können auch keine Rattermarken am Vorderende 5 des Holzrohlings 3 entstehen, die an sich bei Handeingabe immer wieder auftreten, weil die taktweise kurzfristig arbeitende Einzugswalze 6 einen optimalen Andruck und gleichmäßige Vorschubgeschwindigkeit gewährleistet.

Soll mit dauernd arbeitender Einzugswalze 6 gearbeitet, z.B. kalibriert werden, dann werden die Schalter 9, 9a, 10 außer Betrieb und die Einzugswalze 6 auf Dauerbetrieb geschaltet.

Somit wird Handeingabe vorteilhaft vermieden und dennoch die Möglichkeit geschaffen, beliebig lange oder kurze Holzrohlinge 3 mit hoher Präzision zu bearbeiten, weil die Präzisionsminderung durch den Druck der Einzugswalze 6 verhindert wird, indem diese, taktweise gesteuert, nur solange auf die Vorderenden 5 der Holzrohlinge 3 wirkt, bis diese von der ersten Vorschubwalze 8 gefördert werden.

## Patentansprüche

1. Verfahren zum spanabhebenden Bearbeiten von Rohlingen aus Holz oder ähnlichen Werkstoffen wie beispielsweise Kunststoff o. dgl. mittels Abrichtmaschinen o.dgl., bei dem längliche Holzrohlinge auf einer Auflage- und Führungsfläche längst zu sich selbst mittels einer Vorschubeinrichtung solange mit dem Vorderende an einem rotierenden Werkzug, wie z.B. einem Abrichthobelkopf, entlang bewegt werden, bis das bearbeitete Vorderende von einer hinter dem Werkzeug angeordneten Vorschubwalze erfaßt und über einen Referenztisch weiter bewegt wird,
dadurch gekennzeichnet, daß
die Holzrohlinge (3) über eine unbewegliche Führungsfläche (4) einer unmittelbar vor dem Werkzeug (2) angeordneten, gegen die Führungsfläche (4) drückenden, an sich bekannten Einzugswalze (6) vorgeschoben, und die Einzugswalze (6) bei einsetzendem Zug der Vorschubwalze (8) gesteuert andrucklos gesetzt wird,
und daß die Einzugswalze (6) wieder in Förderposition für einen Holzrohling (3) gebracht wird, sobald der in Bearbeitung befindliche Holzrohling (3) den Wirkbereich der Vorschubwalze (8) verlassen und bevor der nächstfolgende Holzrohling (3) den Wirkbereich der Einzugswalze (6) erreicht hat.

2. Verfahren nach Anspruch 1,
dadurch gekennzeichnet,
daß die Holzrohlinge (3) mittels pneumatisch beaufschlagter Einzugswalze (6) angedrückt werden, daß der Andruck der Holzrohlinge (3) pneumatisch aufgehoben wird, sobald jeweils der Förderkontakt ihres Vorderendes mit der Vorschubwalze (8) sensorisch erfaßt ist,
und daß das Ende des Förderkontaktes zwischen der Vorschubwalze (8) und dem Hinterende eines jeweiligen Holzrohlings (3) erfaßt und zur Steuerung der pneumatischen Druckbeaufschlagung der Einzugswalze benutzt wird.

## Claims

1. Process for machining of blanks made of wood or similar materials, such as for instance plastic or the like by means of planing machines or the like, whereby oblong wood blanks are transported with their front end on a support and guide surface in their own longitudinal direction by means of a feeding device along a rotating tool, e.g. a planer head, until the machined front end is seized by an advance roller provided downstream of the tool and further transported over a reference table, characterized in that
the wood blanks (3) are fed by means of input rollers (6) known per se arranged upstream of the tool (2) and pressing against the guide surface (4) and the input roller (6) is rendered pressure-less in a controlled manner when the advance roller (8) starts to exert its traction,
and that the input roller (6) ist brought back to his position for conveying a wood blank (3), as soon as the woode blank (3) being processed has left the action range of the first advance roller (8) and before the next wood blank (3) in line has reached the action range of the input rollers (6).

2. Process according to claim 1,
characterized in
that the wood blanks (3) are pressed by means of pneumatically actuated input rollers (6), that the contact pressure exerted on the wood blanks (3) is pneumatically cancelled as soon as the conveying contact established between each of their front ends and the first advance roller (8) can be detected by sensors, and that the end of the conveying contact between the first advance roller (8) an the rear end of the respective wood blank (3) ist detected an used for the control of the pneumatic pressure actuation of the input rollers.

## Revendications

1. Procédé pour l'usinage par enlèvement de copeaux de pièces brutes en bois ou en matériaux similaires, p.ex. en plastique à l'aide de machines à dégauchir ou similaires, dans lequel l'extrémité antérieure des pièces brutes en bois oblongues est déplacée à l'aide d'un dispositif d'avance sur une surface de support et de guidage dans le sens de sa longueur le long d'un outil rotatif, comme p.ex. une tête de machine à dégrossir, jusqu'à ce que l'extrémité antérieure à usiner soit saisie par un cylindre d'avance situé derrière l'outil et soit déplacée sur une table de référence,
caractérisé par le fait que
les pièces brutes en bois (3) sont poussées sur une surface de guidage fixe (4) vers un rouleau d'alimentation connu en soi (6) placé immédiatement devant l'outil (2) et appuyé contre la surface de guidage (4) et que le rouleau d'alimentation (6) est mis en place sans pression lorsque le cylindre d'avance (8) se met en marche,
et que le rouleau d'alimentation (6) est amené à nouveau en position de transport d'une pièce brute en bois (3) dès que la pièce brute en bois en train d'être usinée (3) a quitté la zone d'action du rouleau d'alimentation (8) et avant que la prochaine pièce brute en bois (3) ait atteint la zone d'action du rouleau d'alimentation (6).

2. Procédé d'après la revendication 1,
caractérisé par le fait
que les pièces brutes en bois (3) sont pressées par un rouleau d'alimentation à admission pneumatique, que la pression des pièces brutes en bois (3) est annulée pneumatiquement dès que le contact de transport de leur extrémité antérieure est saisi par le palpeur du cylindre d'avance (8),
et que la fin du contact de transport entre le cylindre d'avance (8) et l'extrémité antérieure de chaque pièce en bois brute (3) est saisie et utilisée pour la commande de la mise en pression pneumatique du rouleau d'alimentation.
